# EUROPÄISCHE PATENTANMELDUNG

(11) **EP 3 176 346 A1**
(43) Veröffentlichungstag der Anmeldung: **07.06.2017**
(21) Anmeldenummer: 16200638.1
(22) Anmeldetag: 03.07.2013
(51) Int. Cl.: E04F 17/06, E04B 1/76, E04F 13/08, F16B 35/02

(54) **LICHTSCHACHTMONTAGE OHNE WÄRMEBRÜCKE**

(30) Priorität: 06.07.2012 DE 202012102512 U
(62) Teilanmeldung aus: 13174863.4
(71) Anmelder: MEA Bausysteme GmbH, 86551 Aichach (DE)
(72) Erfinder: Grahammer, Josef, 06551 Aichach (DE)
(74) Vertreter: Wolff, Felix

(57) **Zusammenfassung**

Die vorliegende Neuerung betrifft eine Wärmedämmung für eine Gebäudewand im Kellerbereich eines Hauses mit einer Dämmung, die auf der Gebäudewand angeordnet ist.

## Beschreibung

Die vorliegende Neuerung betrifft eine Wärmedämmung für eine Gebäudewand im Kellerbereich eines Hauses mit einer Dämmung, die auf der Gebäudewand angeordnet ist.

Wärmedämmungen kommen heutzutage einer immer größeren Bedeutung zu. Dabei ist es auch gewünscht, den Kellerbereich eines Hauses zu dämmen. Insbesondere im Kellerbereich muss es möglich sein, auch sehr schwere Lichtschächte, beispielsweise Betonlichtschächte, auf der Isolierung an der Kellerwand zu montieren, ohne dass Wärmebrücken entstehen.

Es war deshalb die Aufgabe der vorliegenden Neuerung, eine Wärmedämmung zur Verfügung zu stellen, die eine optimale Anordnung der Wärmedämmung um eine Kellerfensteröffnung aufweist.

Gelöst wird die Aufgabe mit einer Wärmeisolierung gemäß Anspruch 1.

Die vorliegende Neuerung betrifft die Wärmedämmung für eine Gebäudewand im Kellerbereich eines Hauses mit einer Isolierung, die auf der Gebäudewand angeordnet ist. Auf der der Gebäudewand abgewandten Seite der Isolierung ist ein Lichtschacht vorgesehen, der an der Gebäudewand befestigt ist. Dafür ist ein Befestigungsmittel vorgesehen, das aus einem erste und einem zweiten Abschnitt besteht. Ein Abschnitt wird form- und/oder kraftschlüssig, beispielsweise unter Zuhilfenahme eines Dübels, mit der Gebäudewand verbunden. An dem anderen Abschnitt wird der Lichtschacht angeordnet. Vorzugsweise handelt es sich bei den beiden Abschnitten jeweils um einen Gewindestift, d.h. einen Stift, der ein Außengewinde aufweist. Diese beiden Abschnitte des Befestigungsmittels werden neuerungsgemäß durch eine Hülse, vorzugsweise mit einem Innengewinde, miteinander verbunden, wobei die Hülse aus einem Material mit einer geringen Wärmeleitfähigkeit, beispielsweise einem Kunststoffmaterial, gefertigt ist. Die Gewindestifte können jedoch auch stoffschlüssig mit der Hülse verbunden sein, indem sie beispielsweise von einem flüssigem Material, aus dem die Hülse gefertigt ist, umschlossen werden, das anschließend aushärtet. Die Hülse kann aus mehreren Lagen bestehen. Beispielsweise kann die Hülse eine Lage aus einem besonders wärmeisolierenden Material und eine mechanisch besonders stabile Lage aufweisen. Weiterhin neuerungsgemäß ist zwischen den Abschnitten ein Abstand vorgesehen. Dieser Abstand mindert den Wärmefluss von einem Abschnitt zu dem anderen, wirkt demnach isolierend. Dieser Abstand kann lediglich mit Luft gefüllt sein. Der Abstand kann aber auch zumindest teilweise mit einem wärmeisolierenden Material, beispielsweise mit einem Kunststoffmaterial, gefüllt sein. Die Hülse ist vorzugsweise stoffschlüssig mit der Isolierung verbunden. Vorzugsweise ist die Hülse in die Isolierung eingeklebt oder ist durch Aushärten des Materials der Isolierung mit diesem verbunden.

Die neuerungsgemäße Wärmedämmung erlaubt eine wärmebrückenfreie Montage von insbesondere schweren Lichtschächten an einer Gebäudewand.

Als Lichtschacht kommt jeder dem Fachmann geläufige Lichtschacht infrage. Vorzugsweise ist der Lichtschacht jedoch aus Beton gefertigt.

Vorzugsweise besteht die Isolierung aus einem Dämmmaterial, dessen Dicke besonders bevorzugt mindestens 80 mm, vorzugsweise 100 mm oder mehr beträgt.

Bei dem Dämmmaterial handelt es sich um eine sogenannte Perimeterdämmung. Als Perimeterdämmung wird die Wärmedämmung von erdberührten Bauteilen von Gebäuden und Bauwerken an ihrer Außenseite bezeichnet. Dabei kann es sich sowohl um die Dämmung unterhalb der Bodenplatte eines Gebäudes wie auch um die Wanddämmung einer im Erdreich eingebundenen Kelleraußenwand handeln. Die Dämmung muss wasser- und druckbeständig sein, daher werden vorzugsweise geschlossenporige Schaumstoffmaterialien, z. B. extrudierte Polystyrol-Hartschaumplatten oder Schaumglasplatten verwendet. Das Dämmmaterial wird außerhalb der wasserundurchlässigen Schicht (Bitumenanstrich oder Kunststoff-Folie) angebracht. Das Dämmmaterial wird vorzugsweise in Form von Platten zur Verfügung gestellt. Diese Dämmplatten werden vorzugsweise verklebt, damit sie nicht verschoben werden, wenn sich die Hinterfüllung der Baugrube setzt bzw. wenn der Lichtschacht an der Gebäudewand angebracht wird. Weiterhin bevorzugt können auch Recycling-Materialien wie Glasschaum-Granulat und Glasschaumplatten und/oder mineralische Materialien als Perimeterdämmung verwendet werden. Glasschaum-Granulat wird beispielsweise aus reinem Altglas hergestellt. Denkbar ist auch eine Kombination aus mineralischen- und Kunststoffmaterialien als Gemisch und/oder als Mehrschichtdämmung.

Dieses Dämmmaterial ist für die eigentliche Wärmeisolierung zuständig. Bevorzugt weist die Isolierung insbesondere auf der der Gebäudewand abgewandten Seite des Dämmmaterials eine Kaschierung auf. Diese Kaschierung schützt das Dämmmaterial insbesondere vor mechanischen Einflüssen und Witterungseinflüssen, UV-Strahlung und dient in dem vorliegenden Fall ganz besonders bevorzugt als Anlage für den Lichtschacht und/oder als Führung und/oder Auflage für ein Befestigungsmittel, das in der Isolierung insbesondere in dem Wärmedämmmaterial angeordnet wird. Bei der Kaschierung kann es sich beispielsweise um eine Platte aus mineralischem Material, insbesondere Faserzementplatte oder um eine Kunststoffplatte handeln. Die Kaschierung wird form-/kraft- und/oder formschlüssig mit dem Dämmmaterial verbunden.

Vorzugsweise weist die Wärmedämmung einen Einsatz auf, der zwischen der Wand und dem Fensterrahmen und/oder der Isolierung und dem Fensterrahmen eingesetzt wird. Dadurch können die zu der Öffnung gerichteten Kanten der Isolierung geschützt werden und/oder die neuerungsgemäße Wärmedämmung gegen Eindringen von Wasser hinter die Isolierung, insbesondere bei Hochwasser geschützt werden. Besonders bevorzugt wird sowohl die Schnittstelle Fensterrahmen/Einsatz als auch die Schnittstelle Einsatz/Isolierung mit einer Dichtmasse abgedichtet.

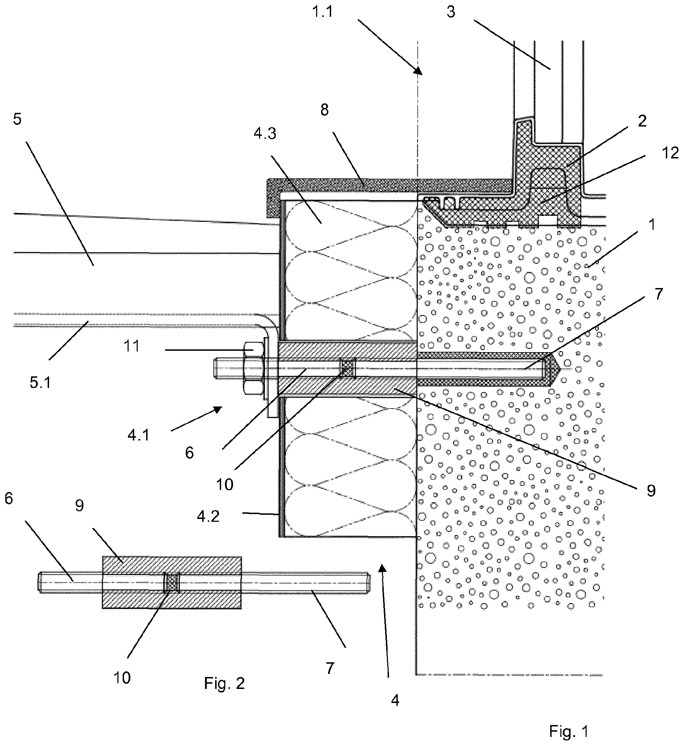

Im Folgenden wird die Neuerung anhand der Figuren 1 und 2 erläutert. Diese Erläuterungen sind lediglich beispielhaft und schränken den allgemeinen Neuerungsgedanken nicht ein.
Figur 1 zeigt die Neuerungsgemäße Wärmedämmung an der ein Lichtschacht angeordnet ist.
Figur 2 zeigt das Befestigungsmittel.

Figur 1 zeigt eine Gebäudewand 1, in dem vorliegenden Fall eine Kellerwand, in der ein Kellerfenster vorgesehen ist. Dieses Kellerfenster weist eine Laibung 12, einen Fensterrahmen 2 und eine Fensterscheibe 3 auf. An ihrer Außenseite ist die Gebäudewand 1 mit einer Isolierung 4, einer sogenannten Perimeter-Dämmung 4 versehen, wobei der Bereich der Ausnehmung 1.1 ausgespart ist. Diese Isolierung 4 besteht in dem vorliegenden Fall aus einem Dämmmaterial 4.3, das beispielsweise auf die Gebäudewand aufgeklebt ist und vorzugsweise aus einer Kaschierung 4.2 hier aus Faserzement, die sich auf der der Gebäudewand 1 abgewandten Seite befindet und auf das Dämmmaterial 4.3 beispielsweise aufgeklebt ist. Die Isolierung ist plattenförmig und im Bereich des Fenster vorzugsweise einstückig vorgesehen, d.h. eine Isolierungsplatte umschließt die Ausnehmung 1.1 an allen vier Seiten oder anders ausgedrückt: In der Isolierung 4 ist eine Ausnehmung für das Fenster vorgesehen. Zur Befestigung des Lichtschachtes 5 an der Gebäudewand 1 ist ein Befestigungsmittel vorgesehen, das zwei getrennte Abschnitte 6, 7 aufweist. Vorzugsweise handelt es sich bei den Abschnitten 6, 7 jeweils um Gewindestifte. Ein Abschnitt 7 des Befestigungsmittels wird beispielsweise mittels eines Dübels mit der Gebäudewand verbunden. An dem anderen Abschnitt 6 des Befestigungsmittels wird, beispielsweise mit einer Mutter 11 und einem an dem Lichtschacht 5 vorgesehenen Befestigungsmittel 5.1, der Lichtschacht 5, hier ein Lichtschacht aus Beton, befestigt. Die beiden Abschnitte 6, 7 sind mit einer Hülse 9 miteinander verbunden, wobei die Verbindung Hülse 9 /Abschnitt 6, 7 form-, kraft- und/oder stoffschlüssig sein kann. Die Hülse ist vorzugsweise aus einem wärmeisolierenden Material gefertigt. Die Hülse kann beispielsweise aus einem rohrförmigen Element bestehen, dessen innerer Querschnitt ausgeschäumt ist. Bei Aushärten des Schaums verbindet sich der Schaum stoffschlüssig mit den Abschnitten 6, 7. In jedem Fall berühren sich die beiden Abschnitte innerhalb der Hülse nicht, so dass keine Wärmebrücke entsteht, sondern es ist ein Abstand 10 zwischen den Stirnflächen der Abschnitte 6, 7 vorgesehen. Dieser Abstand 10 kann mit einem vorzugsweise wärmeisolierenden Material aufgefüllt sein.

Für die Montage des Lichtschachts wird vorzugsweise zunächst die Isolierung 4 an der Gebäudewand 1 angeordnet. Die Isolierung 4 weist vorzugsweise vorgefertigte oder angezeichnete Befestigungsstellen auf. Sofern nötig wird dann das Isolierungsmaterial im Bereich der Befestigungsstelle entfernt, wobei die Ausnehmung in der Isolierung dem äußeren Querschnitt der Hülse entsprechen sollte. Dann wird ein Loch in die Gebäudewand gebohrt und, vorzugsweise unter Zuhilfenahme eines Dübels das gesamte Befestigungsmittel, bestehend aus den beiden Abschnitten 6, 7 und der Hülse 9 an der Wand befestigt. Der äußere Umfang der Hülse kann, sofern erwünscht, mit der Isolierung verbunden, insbesondere wasserdicht verbunden werden, beispielsweise verklebt, werden. Anschließend wird das Befestigungsmittel 5.1 auf den zweiten Abschnitt 6 des Befestigungsmittels gesteckt und mit einer Mutter 11 befestigt. Nachdem das Befestigungsmittel an der Wand befestigt worden ist und bevor der Lichtschacht an der Isolierung angeordnet wird, wird auf der Sichtseite der Isolierung, vorzugsweise auf der Kaschierung 4.2 eine Isolierung gegen Wassereintritt, beispielsweise eine Bitumen-Schicht vorgesehen.

Figur 2 zeigt das Befestigungsmittel, das aus zwei Abschnitten 6, 7, hier zwei Gewindestiften, besteht, die über eine Hülse 9 miteinander verbunden sind. Zwischen den Stirnseiten der Gewindestifte ist ein Abstand 10 vorgesehen, so dass eine Wärmebrücke vermieden wird.

### Bezugszeichenliste:

- 1: Gebäudewand
- 1.1: Ausnehmung
- 2: Fensterrahmen
- 3: Fensterscheibe
- 4: Isolierung
- 4.1: Befestigungsstellen
- 4.2: Kaschierung
- 4.3: Dämmmaterial
- 5: Lichtschacht
- 5.1: Befestigungsmittel an dem Lichtschacht, Haken
- 6: Befestigungsmittel, erster Abschnitt
- 7: Befestigungsmittel, zweiter Abschnitt
- 8: Einsatz
- 9: Hülse, Kunststoffhülse
- 10: Abstand, Kunststoffeinlage
- 11: Befestigungsmittel, Mutter
- 12: Laibung

## Patentansprüche

1. Wärmeisolierung für eine Gebäudewand (1) im Kellerbereich eines Hauses, mit einer Isolierung (4), die auf der Gebäudewand angeordnet ist und mit einem Befestigungsmittel (6, 7) für einen Lichtschacht, **dadurch gekennzeichnet, dass** die Isolierung (4) an die Gebäudewand (1) geklebt ist.

2. Wärmeisolierung nach Anspruch 1, **dadurch gekennzeichnet, dass** die Isolierung (4) aus Dämmmaterial (4.3) und einer Kaschierung (4.2) besteht.

3. Wärmeisolierung nach Anspruch 2 **dadurch gekennzeichnet, dass** das Dämmmaterial (4.3) und die Kaschierung (4.2) plattenförmig vorgesehen sind.

4. Wärmeisolierung nach Anspruch 3, **dadurch gekennzeichnet, dass** beide Platten (4.2, 4.3) eine Kellerfensteröffnung aufweisen.

5. Wärmeisolierung nach Anspruch 4, **dadurch gekennzeichnet, dass** beide Platten (4.2, 4.3) im Bereich der Kellerfensteröffnung einstückig vorgesehen sind.

6. Wärmeisolierung nach Anspruch 4 oder 5, **dadurch gekennzeichnet, dass** die Wärmeisolierung im Bereich der Kellerfensteröffnung einen Einsatz (8) aufweist, der zwischen der Isolierung (4) und einem Fensterrahmen eingesetzt ist.

7. Wärmeisolierung nach Anspruch 6, **dadurch gekennzeichnet, dass** die Kellerfensteröffnung hochwassergeschützt ist.
